# EUROPEAN PATENT APPLICATION

(11) **EP 4 422 244 A1**
(43) Date of publication of application: **28.08.2024**
(21) Application number: 21961467.4
(22) Date of filing: 22.10.2021
(51) Int. Cl.: H04W 16/26

(54) **RADIO RELAY DEVICE AND COMMUNICATION METHOD**

(71) Applicant: NTT DOCOMO, INC., Chiyoda-ku Tokyo 100-6150 (JP)
(72) Inventor: YOSHIOKA, Shohei, Tokyo 100-6150 (JP); KURITA, Daisuke, Tokyo 100-6150 (JP); ECHIGO, Haruhi, Tokyo 100-6150 (JP); KUMAGAI, Shinya, Tokyo 100-6150 (JP); TAKAHASHI, Yuki, Tokyo 100-6150 (JP); NAGATA, Satoshi, Tokyo 100-6150 (JP)
(74) Representative: Hoffmann Eitle
(86) International application number: PCT/JP2021/039184
(87) International publication number: WO 2023/067819

(57) **Abstract**

A wireless relay device includes: a transmitting unit configured to transmit, to a base station, a first signal for allowing the base station to identify the wireless relay device; a receiving unit configured to receive, from the base station, a second signal about a permission to operate as a wireless relay device; and a control unit configured to enable, when the receiving unit receives the second signal, a relay function that allows a signal received from the base station to be transmitted to a terminal and a signal received from the terminal to be transmitted to the base station.

## Description

### [FIELD OF THE INVENTION]

The present invention relates to a wireless relay device and a communication method in a wireless communication system.

### [BACKGROUND OF THE INVENTION]

The 3rd generation partnership project (3GPP) is working on a wireless communication scheme called "5G" or "NR" (New Radio) in order to achieve further enhancement of system capacity, faster data transmission rates, reduced delays in wireless parts, and so forth (hereinafter this wireless communication scheme will be referred to as "NR."). In 5G, various wireless technologies and network architectures are under study in order to meet the requirement of achieving a throughput of 10 Gbps or higher, while reducing the delays in wireless parts to 1 ms or less (see, for example, non-patent document 1).

Next generation communications are expected to use high frequency bands. Characteristics of these high frequency bands include a decrease in the number of scatterers, reduced shadowing effect, increased attenuation with distance, and so forth. Taking these into account, there is a need for improvements in communication quality. It is then assumed that beam control and an environment that ensures communication quality will be required.

For example, one problem with high frequency bands is that dead zones are likely to be created due to strongly rectilinear radio waves. Therefore, for example, an attempt has been made to improve the quality of communication in a multi-path environment by using a passive repeater, an active reflecting surface (RIS: Reconfigurable Intelligent Surface), a smart repeater that receives, amplifies, and re-radiates signals, and the like (see, for example, non-patent document 2).

### [Citation List]

### [Non-Patent Document]

[Non-Patent Document 1] 3GPP TS 38.300 V16.6.0 (2021-06)
[Non-Patent Document 2] NTT DOCOMO, INC. White Paper: 5G Evolution and 6G (2021-02, Ver. 3.0)

### Internet:

https://www.nttdocomo.co.jp/binary/pdf/corporate/technology/wh itepaper_6g/DOCOMO_6G_White_PaperJP_20210203.pdf

### [SUMMARY OF THE INVENTION]

### [TECHNICAL PROBLEM]

A wireless relay device such as a reflecting surface or a smart repeater that relays radio signals from a source of radio waves such as a base station to a recipient of the radio waves such as a terminal by reflecting or allowing the passage of the radio waves may be installed by a user other than a network operator. Allowing users to install wireless relay devices freely might lead to improvements in network environment that meet the users' needs. From the network's perspective, on the other hand, the relay function needs to be controlled by taking into account how wireless relay devices are installed.

The present invention has been made in view of the foregoing, and aims to control the relay operation in a wireless communication system by taking into account how wireless relay devices are installed.

### [SOLUTION TO PROBLEM]

According to the technique disclosed herein, a wireless relay device is provided. This wireless relay device includes: a transmitting unit configured to transmit, to a base station, a first signal for allowing the base station to identify the wireless relay device; a receiving unit configured to receive, from the base station, a second signal about a permission to operate as a wireless relay device; and a control unit configured to enable, when the receiving unit receives the second signal, a relay function that allows a signal received from the base station to be transmitted to a terminal and a signal received from the terminal to be transmitted to the base station.

### [ADVANTAGEOUS EFFECTS OF INVENTION]

According to the technique disclosed herein, the relay operation in a wireless communication system can be controlled by taking into account how wireless relay devices are installed.

### [BRIEF DESCRIPTION OF THE DRAWINGS]

[FIG. 1] FIG. 1 is a diagram for explaining a wireless communication system according to an embodiment of the present invention;
[FIG. 2] FIG. 2 is a diagram that illustrates an example functional structure of a base station 10 according to an embodiment of the present invention;
[FIG. 3] FIG. 3 is a diagram that illustrates an example functional structure of a terminal 20 according to an embodiment of the present invention;
[FIG. 4] FIG. 4 is a diagram that illustrates an example functional structure of a wireless relay device 30 according to an embodiment of the present invention;
[FIG. 5] FIG. 5 is a diagram that illustrates an example operation of the wireless relay device 30 according to an embodiment of the present invention;
[FIG. 6] FIG. 6 is a diagram that illustrates an example of communication in a high frequency band;
[FIG. 7] FIG. 7 is a diagram that illustrates an example of a reflective wireless relay device 30 according to an embodiment of the present invention;
[FIG. 8] FIG. 8 is a diagram that illustrates an example of a transmissive wireless relay device 30 according to an embodiment of the present invention;
[FIG. 9] FIG. 9 is a diagram that illustrates an example (1) of operation of a wireless relay device according to an embodiment of the present invention;
[FIG. 10] FIG. 10 is a diagram that illustrates an example (2) of operation of a wireless relay device according to an embodiment of the present invention;

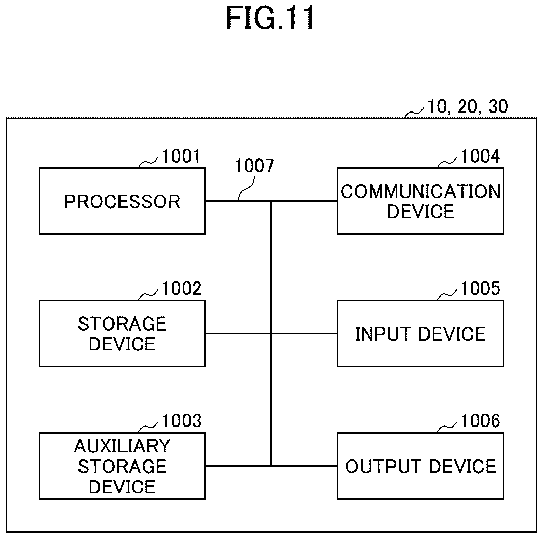

[FIG. 11] FIG. 11 is a diagram that illustrates an example hardware structure of a base station 10 or a terminal 20 according to an embodiment of the present invention; and

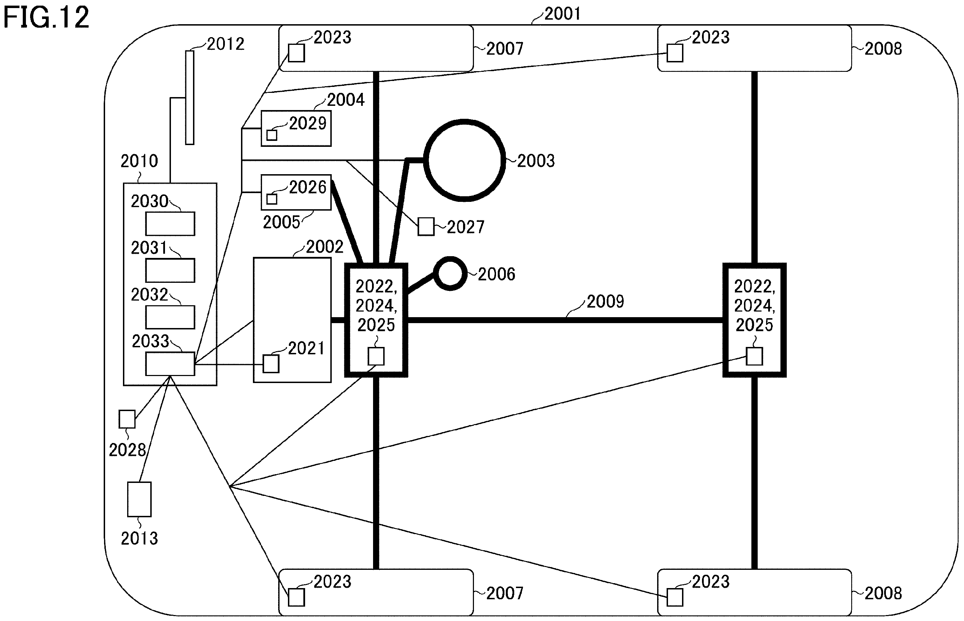

[FIG. 12] FIG. 12 is a diagram that illustrates an example structure of a vehicle 2001 according to an embodiment of the present invention.

### [DETAILED DESCRIPTION OF THE PREFERRED EMBODIMENT]

Now, an embodiment of the present invention will be described below with reference to the accompanying drawings. Note that the embodiment described below is only an example, and the applicability of the present invention is by no means limited to the following embodiment.

Existing techniques may be used as appropriate to operate the wireless communication system according to the embodiment of the present invention. These existing techniques include, but are not limited to, for example, existing LTE. Also, unless otherwise specified, the term "LTE" as used herein has a broad meaning including LTE-Advanced and systems that emerged after LTE-Advanced (for example, NR).

Also, in the following description of the embodiment of the present invention, terms that are used in existing LTE will be used, including synchronization signal (SS), primary SS (PSS), secondary SS (SSS), physical broadcast channel (PBCH), physical random access channel (PRACH), physical downlink control channel (PDCCH), physical downlink shared channel (PDSCH), physical uplink control channel (PUCCH), physical uplink shared channel (PUSCH), and so forth. This is for ease of description, and signals, functions, and so forth that are substantially the same as these may be referred to by other names. Also, in NR, the above terms correspond to NR-SS, NR-PSS, NR-SSS, NR-PBCH, NR-PRACH, and so forth. However, signals used in NR may not always be expressly preceded by the prefix "NR-."

Also, according to the embodiment of the present invention, the duplex method may be time division duplex (TDD), frequency division duplex (FDD), or may be any other method (including, for example, flexible duplex).

Also, according to the embodiments of the present invention, when a radio parameter or the like is "configured," this may mean that a predetermined value is configured in advance ("pre-configured"), or that a radio parameter or the like that is reported from a base station 10 or a terminal 20 is configured.

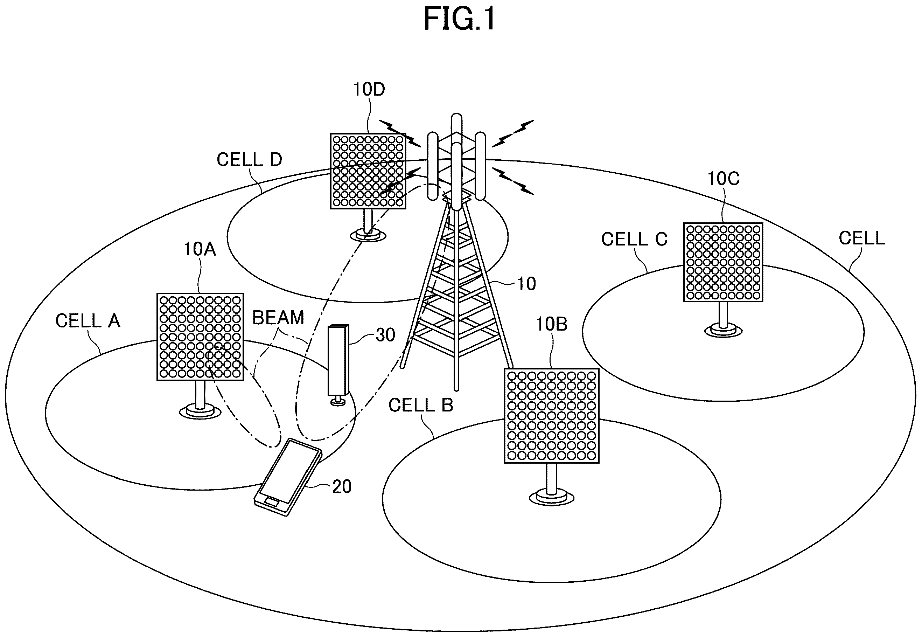

FIG. 1 is a diagram for explaining a wireless communication system according to the embodiment of the present invention. The wireless communication system according to the embodiment of the present invention includes a base station 10 and a terminal 20, as shown in FIG. 1. There may be two or more base stations 10 and two or more terminals 20.

The base station 10 is a communication device that provides one or more cells and performs wireless communication with the terminal 20. The physical resources of radio signals are defined in the time domain and the frequency domain. The time-domain resources may be indicated by the number of orthogonal frequency division multiplexing (OFDM) symbols, and the frequency-domain resources may be indicated by the number of subcarriers or resource blocks. Also, a transmission time interval (TTI) in the time domain may be a slot or a sub-slot, or a TTI may be a subframe.

The base station 10 is capable of carrier aggregation, which allows the base station 10 to communicate with the terminal 20 by bundling multiple cells (multiple component carriers (CCs)). In carrier aggregation, one primary cell (PCell) and one or more secondary cells (SCells) are used.

The base station 10 transmits synchronization signals, system information, and so forth to the terminal 20. The synchronization signals include, for example, NR-PSS and NR-SSS. The system information is transmitted, for example, on NR-PBCH or PDSCH, and is also referred to as "broadcast information." Referring to FIG. 1, the base station 10 transmits a control signal or data to the terminal 20 via downlink (DL), and receives a control signal or data from the terminal 20 via uplink (UL). Note that, in the following description, signals and the like that are transmitted on control channels such as PUCCH and PDCCH will be referred to as "control signals," and signals and the like that are transmitted on shared channels such as PUSCH and PDSCH will be referred to as data; however, these are simply examples.

The terminal 20 is a communication device with a wireless communication function, such as a smartphone, a mobile phone, a tablet, a wearable terminal, or a machine-to-machine (M2M) communication module. As shown in FIG. 1, the terminal 20 receives control signals or data from the base station 10 via DL, and transmits control signals or data to the base station 10 via UL, thereby using various communication services provided by the wireless communication system. Note that the terminal 20 may be hereinafter referred to as a "UE," and the base station 10 may be hereinafter referred to as a "gNB."

The terminal 20 is capable of carrier aggregation, which allows the terminal 20 to communicate with the base station 10 by bundling multiple cells (multiple CCs). In carrier aggregation, one primary cell and one or more secondary cells are used. Also, PUCCH-SCell on PUCCH may be used.

Also, in the wireless communication system according to the embodiment of the present invention, the base station 10 is a wireless base station that operates according to 5G or 6G standards, for example, and forms a cell. Note that the cell is a relatively large cell and referred to as a "macro cell."

A base station 10A to a base station 10D are base stations that operate according to 5G or 6G standards. The base station 10A to the base station 10D form cell A to cell D, respectively, which are smaller in size than the macro cell. Cell A to cell D may be referred to as "small cells" or "micro cells." As shown in FIG. 1, cell A to cell D may be formed to be included in the macro cell.

A "macro cell" may generally be interpreted as a communicable area with a radius of several hundred meters to several tens of kilometers covered by one base station. Also, the term "small cell" may be interpreted as a general term for cells that have low transmission power and cover a smaller area compared to macro cells.

Note that the base station 10 and the base stations 10A to 10D may be referred to as "gNodeBs" (gNBs) or "BSs." Also, the terminal 20 may be referred to as a "UE" or an "MS." Furthermore, the specific structure of the wireless communication system shown in FIG. 1, including the number and types of base stations and terminals, is an example and by no means limiting.

Also, the wireless communication system does not necessarily have to operate according to 5G or 6G standards. For example, the wireless communication system may be a 6G next generation wireless communication system or an LTE-based wireless communication system.

The base station 10 and the base stations 10A to 10D perform wireless communication with the terminal 20 according to 5G or 6G standards, for example. The base station 10, the base stations 10A to 10D, and the terminal 20 may control radio signals transmitted from multiple antenna elements, thereby supporting, for example: massive MIMO, in which beams are generated with higher directivity; carrier aggregation (CA), in which multiple component carriers (CC) are bundled and used; dual connectivity (DC), in which the terminal 20 communicates with each of two NG-RAN nodes simultaneously; and integrated access and backhaul (IAB), in which wireless backhaul between wireless communication nodes such as gNBs and wireless access to the terminal 20 are integrated.

Also, the wireless communication system can support frequency bands higher than the following frequency ranges (FRs) defined in 3GPP Release 15. For example, the wireless communication system may support 410 MHz to 7.125 GHz as FR1 or support 24.25 GHz to 52.6 GHz as FR2. Furthermore, the wireless communication system may support the frequency band over 52.6 GHz, up to 114.25 GHz. This frequency band may be referred to as a "millimeter wave band."

Now, the base station 10 supporting massive MIMO can transmit beams. Massive MIMO generally refers to a type of MIMO communication to use an antenna having 100 or more antenna elements, and the effect of multiplexing multiple streams enables faster wireless communication than heretofore. Advanced beam forming is also made possible. The width of beams can vary dynamically depending on the frequency band used or the condition of the terminal 20. Also, by using narrow beams, the beam forming gain can lead to increased received signal power. Furthermore, advantages such as reduced interference and efficient use of radio resources are anticipated.

The wireless communication system may include a wireless relay device 30. In the embodiment of the present invention, the wireless relay device 30 may be, for example, a reflecting surface (RIS: Reconfigurable Intelligent Surfaces), a phase control reflector, a passive repeater, an intelligent reflecting surface (IRS), and so forth. Specific examples of a reflecting surface (RIS) include those that are referred to as a "meta-material reflecting surface," "dynamic meta surface," "meta surface lens," and so forth (see, for example, non-patent document 2).

According to the embodiment of the present invention, a wireless relay device 30 relays radio signals transmitted from the base station 10A, for example. In the following description of the embodiment of the present invention, "to relay" may mean at least one of "to reflect," "to transmit" (to "allow passage"), "to focus" (to concentrate radio waves on substantially the same point), or "to diffract." The terminal 20 can receive radio signals relayed by the wireless relay device 30. The wireless relay device 30 may relay radio signals transmitted from the terminal 20 or relay radio signals transmitted from the base station 10.

For example, the wireless relay device 30 can change the phase of radio signals that the wireless relay device 30 relays to the terminal 20. From this point of view, the wireless relay device 30 may be referred to as a "variable phase reflector." Note that, in the following embodiment, the wireless relay device 30 may have a function to change the phase of radio signals and relaying the resulting radio signals, but this is by no means limiting. Also, the wireless relay device 30 may be referred to as a "repeater," a "relay device," a "reflect array," an "IRS," a "transmit array," and so forth.

Also, in the following embodiment, the wireless relay device 30 such as an RIS may be referred to as a "battery-less device," a "meta-material function device," an "intelligent reflecting surface," a "smart repeater," and so forth. For instance, the wireless relay device 30 such as an RIS or a smart repeater may be defined as one that has the following functions (1) to (5):
(1) The wireless relay device 30 may have a function to receive signals transmitted from the base station 10. The signals may include DL signals such as an SS/PBCH block (SSB), a PDCCH, a PDSCH, a demodulation reference signal (DM-RS), a phase tracking reference signal (PT-RS), a channel status information reference signal (CSI-RS), an RIS-dedicated signal, and so forth. The wireless relay device 30 may have a function to receive signals carrying information about a meta-material function. Note that the wireless relay device 30 may have a function to transmit these signals to the terminal 20.
(2) The wireless relay device 30 may have a function to transmit signals to the base station 10. These signals may include UL signals such as a PRACH, a PUCCH, a PUSCH, a DM-RS, a PT-RS, an SRS, an RIS-dedicated signal, and so forth. The wireless relay device 30 may have a function to transmit information about a meta-material function. Note that the wireless relay device 30 may have a function to receive these signals from the terminal 20.
(3) The wireless relay device 30 may have a function to establish frame synchronization with the base station 10. Note that the wireless relay device 30 may have a function to establish frame synchronization with the terminal 20.
(4) The wireless relay device 30 may have a function to reflect signals transmitted from the base station 10 or the terminal 20. For example, this reflection function may be a function related to phase shifting or a function related to beam control (for example, a function related to transmission configuration indication (TCI)-state control, quasi co-location (QCL) control, beam selection and application, spatial filter/precoding weight selection and application, and so forth).
(5) The wireless relay device 30 may have a function to change the power of signals transmitted from the base station 10 or the terminal 20. For example, this power changing function may include amplification of power.

To say that signals are "received and transmitted" or "relayed" in the wireless relay devices 30 such as an RIS or a smart repeater may mean that the signals are transmitted by using the following function A, but not the following function B.
Function A: A phase changer is applied.
Function B: No compensation circuit (for example, an amplifier, a filter, etc.) is used.

Another example may be provided with the following functions:
Function A: A phase changer and compensation circuit are applied.
Function B: No frequency conversion is involved.

Note that, in the wireless relay device 30 such as an RIS, when the phase is changed, the amplitude may be amplified as well. Also, to "relay" signals in the wireless relay device 30 such as an RIS may mean: transmitting the received signals as is without performing layer 2-level or layer 3-level processing; transmitting the signals received at the physical layer level as is; or transmitting the received signals as is without interpreting the signals (and thereupon the signals' phase may be changed, their amplitude may be amplified, and so forth).

### (Device structure)

Next, example functional structures of the base station 10, terminal 20, and wireless relay device 30 that execute the processes and operations according to the embodiment of the present invention will be described. The base station 10, terminal 20, and wireless relay device 30 include functions to carry out the embodiment described below. However, each of the base station 10, terminal 20, and wireless relay device 30 may have only part of the functions of the embodiment.

### <Base station 10>

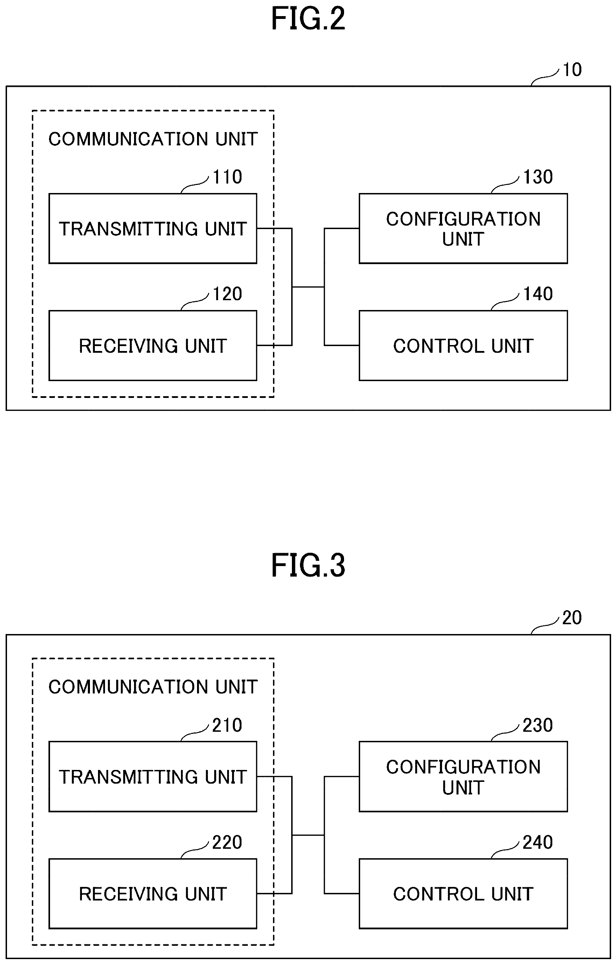

FIG. 2 is a diagram that illustrates an example functional structure of the base station 10. As illustrated in FIG. 2, the base station 10 includes a transmitting unit 110, a receiving unit 120, a configuration unit 130, and a control unit 140. The functional structure illustrated in FIG. 2 is only an example. If the operation according to the embodiment of the present invention can be performed, any functional categories and any functional unit names may be used. The transmitting unit 110 and the receiving unit 120 may be referred to as a "communication unit."

The transmitting unit 110 has a function to generate signals to be transmitted to the terminal 20 side and transmit the signals wirelessly. The receiving unit 120 has a function to receive various signals transmitted from the terminal 20 and acquire, for example, higher layer information from the received signals. Also, the transmitting unit 110 has a function to transmit NR-PSS, NR-SSS, NR-PBCH, DL/UL control signals, DL data, and so forth, to the terminal 20. Furthermore, the transmitting unit 110 transmits the configuration information, which will be described in the following embodiment, and the like.

The configuration unit 130 stores configuration information that is configured in advance and various configuration information to be transmitted to the terminal 20, in a storage device, and reads the information from the storage device on an as-needed basis. The control unit 140 controls the resource allocation, controls the entirety of the base station 10, and so forth. Note that a functional unit relating to signal transmission in the control unit 140 may be included in the transmitting unit 110, and a functional unit relating to signal reception in the control unit 140 may be included in the receiving unit 120. The transmitting unit 110 and the receiving unit 120 may be referred to as a "transmitter" and a "receiver," respectively.

### <Terminal 20>

FIG. 3 is a diagram that illustrates an example functional structure of the terminal 20. As illustrated in FIG. 3, the terminal 20 includes a transmitting unit 210, a receiving unit 220, a configuration unit 230, and a control unit 240. The functional structure illustrated in FIG. 3 is only one example. Insofar as the operations according to the embodiments of the present invention can be carried out, any functional categories and functional unit names may be used. The transmitting unit 210 and the receiving unit 220 may be referred to as a "communication unit."

The transmitting unit 210 creates transmission signals from the transmission data and transmits these transmission signals wirelessly. The receiving unit 220 receives various signals wirelessly, and acquires signals of higher layers from the physical layer signals received. The transmitting unit 210 transmits HARQ-ACK, and the receiving unit 220 receives the configuration information, which will be described later in the embodiment.

The configuration unit 230 stores various configuration information received from the base station 10 by the receiving unit 220 in the storage device, and reads the stored configuration information from the storage device on an as-needed basis. The configuration unit 230 also stores the configuration information that is configured in advance. The control unit 240 controls the entire terminal 20. Note that a functional unit relating to signal transmission in the control unit 240 may be included in the transmitting unit 210, and a functional unit relating to signal reception in the control unit 240 may be included in the receiving unit 220. Also, the transmitting unit 210 and the receiving unit 220 may be referred to as a "transmitter" and a "receiver," respectively.

### <Wireless relay device 30>

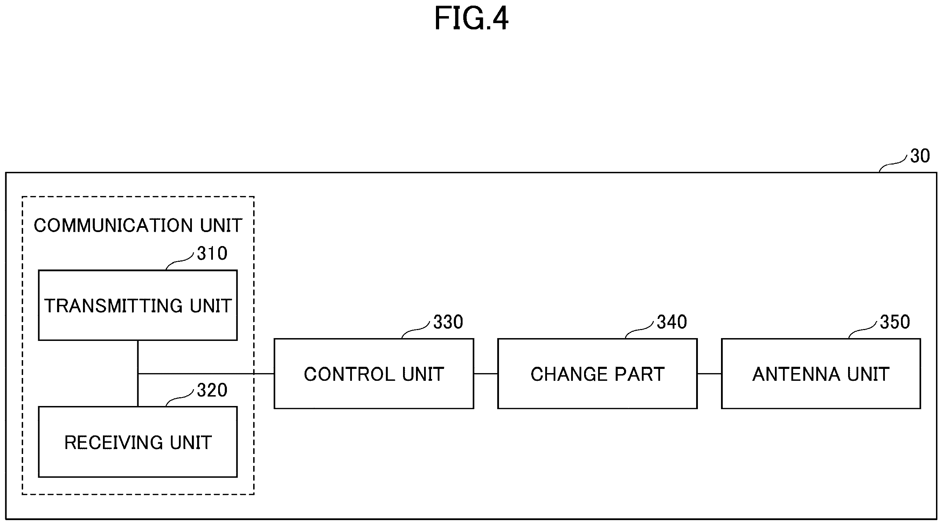

FIG. 4 is a diagram that illustrates an example functional structure of the wireless relay device 30 according to the embodiment of the present invention. As shown in FIG. 4, the wireless relay device 30 includes a transmitting unit 310, a receiving unit 320, a control unit 330, a change unit 340, and an antenna unit 350. Insofar as the operations according to the embodiment of the present invention can be carried out, any functional categories and any functional unit names may be used. The transmitting unit 310 and the receiving unit 320 may be referred to as a "communication unit."

The antenna unit 350 includes at least one antenna connected to the change unit 340. For example, the antenna unit 350 may be arranged as an antenna array. In the following embodiment of the present invention, the antenna unit 350 may be particularly referred to as a "relay antenna." Note that the change unit 340 and the antenna unit 350 may also be referred to as a "relay unit."

The change unit 340 is connected to the antenna unit 350, and can change the phase, load, amplitude, and so forth. For example, the change unit 340 may be a variable phase shifter, a phase changer, an amplifier, and so forth. For example, by changing the phase of a radio wave that arrives at the relay antenna from a radio wave source, the angle or the beam of the radio wave can be changed.

The control unit 330 is a control means for controlling the change unit 340. In this embodiment of the present invention, the control unit 330 functions as a control unit that controls the state of relaying when radio waves from the base station 10 or the terminal 20 are relayed without being interpreted as signals. Here, the control unit 330 may change the state of relaying based on control information received from the base station 10 or the terminal 20 via the communication unit, or change the state of relaying based on the condition of radio wave reception from the base station 10 or the terminal 20 via the communication unit. For example, the control unit 330 may select an appropriate receiving beam and transmitting beam (or their angles) based on control information such as SSB, and control the change unit 340. Similarly, the control unit 330 may select an appropriate combination of a receiving direction and a transmitting direction based on criteria such as the highest received quality, the highest received power, and so forth, from the condition of radio wave reception, and control the change unit 340.

Also, in the following embodiment of the present invention, the control unit 330 can control the change unit 340 based on information about the propagation paths between the terminal 20 or the base station 10A, and the antenna unit 350, for example (including information estimated from the state of radio wave reception and control information, the same applying hereinafter). For example, the control unit 330 can change the phase of radio waves received from the base station 10A, by using an existing technique such as an active repeater or an RIS, without changing their transmission power, so that the radio waves can be relayed in specific directions such as that of a recipient (the terminal 20 in this case) of the radio waves. To be more specific, the control unit 330 controls the phase of radio signals in order to relay the radio signals to the terminal 20 or the base station 10A based on H_{PT} and H_{RP}, which are estimated propagation path information. That is, the principle applied here is the same as beam forming, for example; radio waves can be relayed in specific directions by changing the phase of the antenna array. Note that the wireless relay device 30 controls (changes) only the phase of radio signals (radio waves) in the control unit 330. That is, the wireless relay device 30 may relay radio signals without feeding power, without amplifying the power of radio signals to be relayed.

Also, according to the embodiment of the present invention, the control unit 330 may obtain information based on the state of signal reception. Also, the receiving unit 320 may obtain control information from the base station 10A or the terminal 20. For example, the receiving unit 320 may receive various signals such as SSB, transmitted from the base station 10A or the terminal 20, as control information (including various signals shown as examples in the foregoing description of functions).

Also, the control unit 330 may estimate the propagation path information (H_{PT} and H_{RP}) between the source of radio waves (for example, the base station 10A or the terminal 20) and the antenna unit 350 based on the state of radio wave reception (for example, changes in received power) while the change unit 340 is executing control.

The propagation path information (propagation channel information) about each propagation path is, to be more specific, information about amplitude, phase, and so forth, and information that is estimated with respect to the propagation path of radio waves that arrive at the antenna unit 350 in the embodiment of the present invention. For instance, based on the same principle as I/Q (In-phase/Quadrature) detection, the control unit 330 may estimate propagation path information in the antenna unit 350 based on the change in received power when the phase of the change unit 340 of the arrayed antenna unit 350 is switched to the quadrature phase.

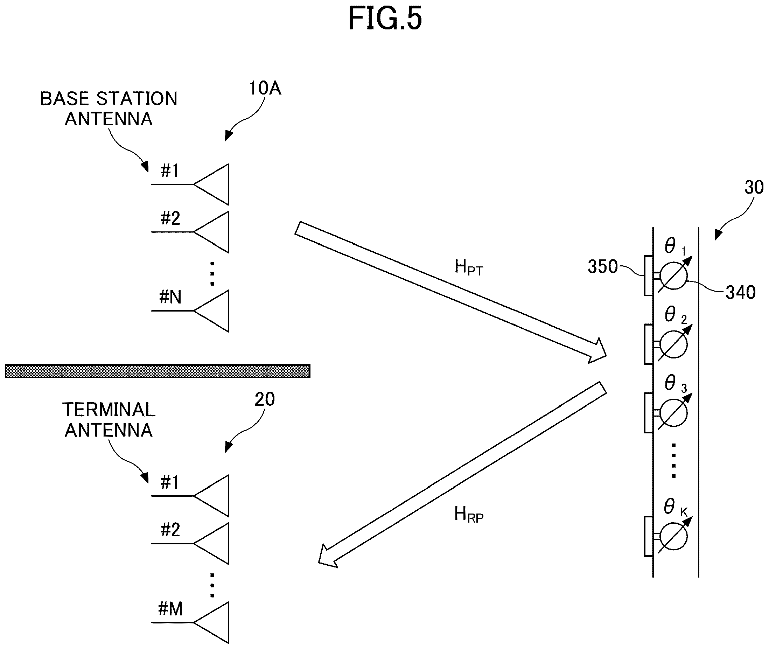

FIG. 5 is a diagram that illustrates an example operation of the wireless relay device 30 according to the embodiment of the present invention. As shown in FIG. 5, for example, the wireless relay device 30 is situated between the base station 10A (which may be another base station 10 or the like) and the terminal 20, and relays (reflects, transmits, focuses, diffracts, etc.) the radio signals transmitted and received between the base station 10A and the terminal 20.

To be more specific, when the wireless quality is good, radio signals are transmitted and received directly between the base station 10A and the terminal 20 by bypassing the wireless relay device 30. On the other hand, when the wireless quality deteriorates, such as when there is an obstacle between the base station 10A and the terminal 20, the wireless relay device 30 relays the radio signals transmitted and received between the base station 10A and the terminal 20.

To be more specific, the wireless relay device 30 estimates the propagation path information H_{PT} and H_{RT} between the source of radio waves such as the base station 10A or the terminal 20, and the relay antennas, based on changes in received power while the change unit 340, such as a variable phase shifter, is executing control. The wireless relay device 30 controls the change unit 340 such as a variable phase shifter based on the estimated propagation path information, thereby relaying radio signals toward a recipient of radio waves such as the terminal 20. Note that estimating the propagation path information H_{PT} and H_{RT} is by no means limiting. That is, the wireless relay device 30 may control the change unit 340 such as a variable phase shifter based on control information received from the base station 10A or the terminal 20, thereby relaying radio signals to a recipient of radio waves such as the base station 10A or the terminal 20.

Here, a "propagation path" or a "propagation channel" refers to an individual communication path in wireless communication, and is a communication path between transmitting/receiving antennas (for example, the base station antennas and terminal antennas in the drawing).

For instance, the wireless relay device 30 includes an antenna unit 350, which includes small multi-antenna elements and supports massive MIMO, and a change unit 340, which includes a variable phase shifter or a phase changer that changes the phase of radio signals, to be more specific, radio waves, to specific phases. Using the change unit 340, the wireless relay device 30 controls the phase of radio waves to be relayed to the terminal 20 or the base station 10A.

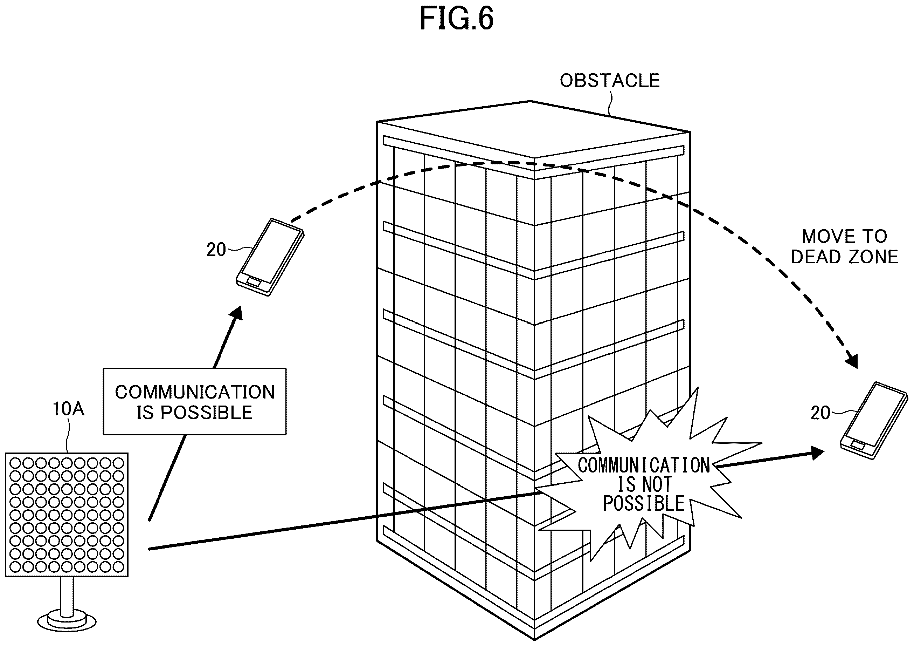

FIG. 6 is a diagram that illustrates an example of communication in a high frequency band. As illustrated in FIG. 6, when a high frequency band of several GHz to several tens of GHz or higher is used, dead zones are likely to be created due to the strong rectilinearity of radio waves. If the base station 10A and the terminal 20 are visible to each other, wireless communication between the base station 10A and the terminal 20 is not affected even if a high frequency band is used. On the other hand, if the line of sight between the base station 10A and the terminal 20 is blocked by an obstacle such as a building or a tree, the wireless quality between them suffers a significant degradation. That is, if the terminal 20 moves to a dead zone blocked by an obstacle, it may cease to communicate.

Considering that there are applications (remote control, for example) that take advantage of characteristics such as high speed, large capacity, and low latency, it is important to eliminate dead zones, that is, ensure connectivity between base stations and terminals without letting communication die inside a wireless communication system.

Therefore, techniques such as radio wave propagation control devices such as RISs or smart repeaters have been developed, whereby radio waves can be relayed between the base station 10A and the terminal 20. In this way, controlling the propagation characteristics of base station signals can lead to improved communication performance, so that it is possible to expand coverage without providing additional signal sources, and save the increase in operating costs that entails from installing additional base stations.

Conventional radio wave propagation control devices may be categorized into two subtypes: passive and active. Although passive radio wave propagation control devices have an advantage of not requiring control information, they cannot track moving objects or changes in the environment. On the other hand, while active radio wave propagation control devices have a disadvantage of requiring control information and increasing overhead, they can control the propagation characteristics of radio waves variably by changing the state of control antennas with respect to load (phase), and track moving objects or changes in the environment.

Active radio wave propagation control devices and control methods have two subtypes: feedback (FB) model and propagation path information model. In the FB model, a variable radio wave propagation control device has the terminal 20 report, as feedback, the conditions of communication when the load (phase) is changed randomly, so that optimal conditions can be searched for. On the other hand, in the propagation path information model, the state of load is determined based on information about the propagation paths between base stations and the radio wave propagation control device, so that optimal radio wave propagation control is possible. Both types are applicable to the embodiment of the present invention.

Also, the method of relaying signals can be categorized into reflective, transmissive, diffractive, concentrating, and other types. In the following embodiment, examples of reflective and transmissive structures will be described (as for the diffractive and concentrating types, see non-patent document 2).

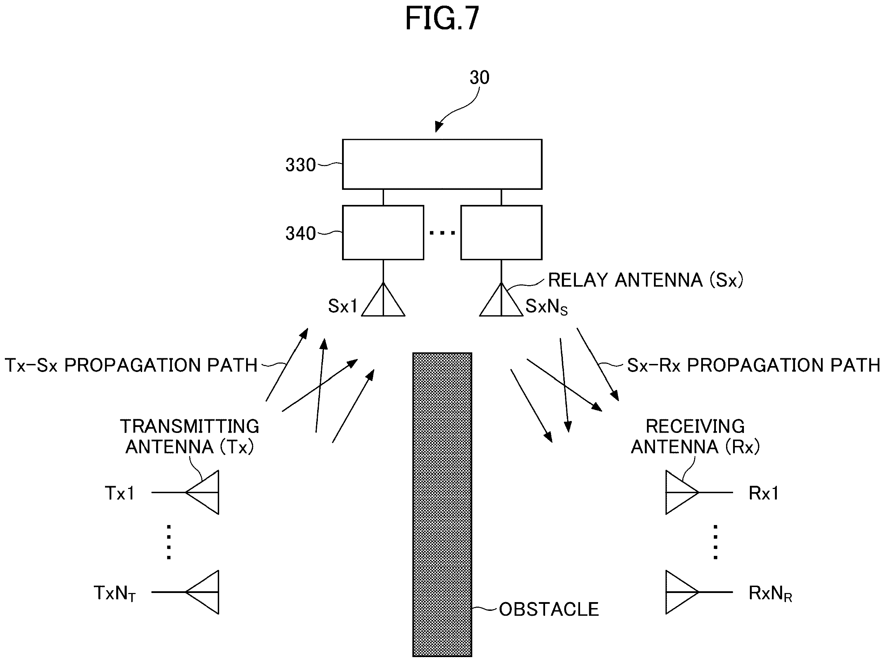

FIG. 7 is a diagram that illustrates an example of a reflective wireless relay device 30 according to the embodiment of the present invention. An example system structure of the reflective wireless relay device 30 will be described with reference to FIG. 7. FIG. 7 is a diagram that illustrates the relationships among the transmitting antennas Tx of the base station 10A, the relay antennas Sx of the reflective wireless relay device 30, and the receiving antennas Rx of the terminal 20. As shown in FIG. 7, an embodiment of the present invention is an example of MIMO, in which there are multiple propagation paths between Tx and Sx and multiple propagation paths between Sx and Rx. The wireless relay device 30 relays radio waves by controlling the change unit 340 which includes a variable phase shifter for the relay antenna Sx and the like.

As shown in FIG. 7, in the event a reflective wireless relay device 30 is used, an array of relay antennas is arranged to face the same direction. By this means, the propagation paths of the relay antennas can be estimated based on the state of radio wave reception observed when the phase condition of the relay antennas are changed in multiple patterns.

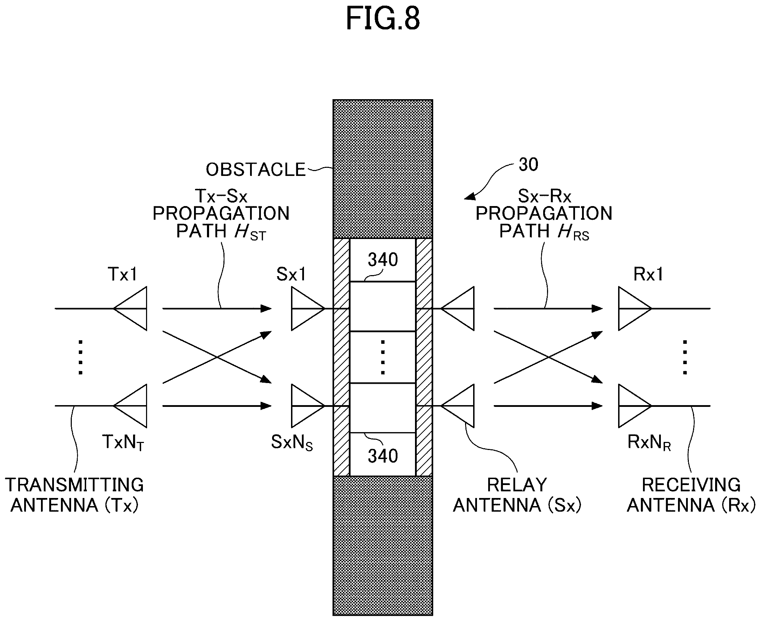

FIG. 8 is a diagram that illustrates an example of a transmissive wireless relay device 30 according to an embodiment of the present invention. An example system structure of the transmissive wireless relay device 30 will be described with reference to FIG. 8. FIG. 8 is a diagram that illustrates the relationships among the transmitting antennas Tx of the base station 10A, the relay antennas Sx of the transmissive wireless relay device 30, and the receiving antennas Rx of the terminal 20. As shown in FIG. 8, an embodiment of the present invention is an example of MIMO, in which there are multiple propagation paths between Tx and Sx and multiple propagation paths between Sx and Rx. As shown in the drawing, when radio waves arrive from one side, the wireless relay device 30 relays them to the other side via the change unit 340, which includes a variable phase shifter for the relay antennas Sx and the like. In this way, in the event a transmissive wireless relay device 30 is used, the reference antennas in the left half of the drawing and the relay antennas in the right half of the drawing are paired such that each pair of antennas are oriented in opposite directions. By this means, radio waves that arrive from one side can be relayed to the other side. Either the transmissive wireless relay device 30 or the reflective wireless relay device 30 may be configured such that the power that reaches the relay antennas can be detected by using a power detector or the like, and the state of radio wave reception can be measured. Furthermore, the relay antennas' propagation paths can be estimated based on received signals that are observed when the phase condition of the relay antennas is changed in multiple patterns.

Future networks such as 6G require even higher quality than 5G. For example, ultra-high speed on the order of tera-bps, high reliability and low latency that are compatible with the level of optical communication, and so forth are required. To achieve this quality level, it is envisaged that very high frequencies, for example terahertz waves, will be used. For example, assuming that very high frequencies such as terahertz waves are used, the expected advantages include higher speeds enabled by the use of ultra-wide bands and reduced delays due to shorter symbol lengths. On the other hand, some drawbacks are expected as well, including narrowing of coverage due to an increase in attenuation, a decrease in reliability due to high rectilinearity, and so forth. Therefore, it is necessary to consider how to ensure redundancy at each location where 6G communication is needed, that is, how to increase the number of transmission points in communication.

As described above, an RIS reflects or transmits a beam transmitted from the base station 10 or the terminal 20, in a predetermined direction, and delivers the beam to the terminal 20 or the base station 10. A passive RIS is a device that does not change control with respect to the reflection angle, beam width, and so forth depending on the position of the mobile station. A passive RIS thus does not require control information, but has difficulty controlling beams precisely. An active RIS is a device that changes control with respect to the reflection angle, beam width, and so forth depending on the position of the mobile station. Although an active RIS can thus control beams precisely, the need for control information results in increased overhead. By using RISs, the number of transmission points in communication can be increased.

Note that the term "RIS" may be a name for any of following (1) to (4), but these are by no means limiting:
(1) a battery-less device;
(2) a meta-material function device;
(3) an intelligent reflecting surface; and
(4) a smart repeater.

An RIS may be any device with predetermined functions, and these predetermined functions may include, for example, at least one of following (1) and (2):

### (1) UE functions:

A function to receive signals transmitted from the base station 10 (including, for example, DL signals, SSB, PDCCH, PDSCH, DM-RS, PT-RS, CSI-RS, RIS-dedicated signals, etc.). The RIS may receive information about the following (2) meta-material functions by using this receiving function.

A function to transmit signals to the base station 10 (including, for example, UL signals, PRACH, PUCCH, PUSCH, DM-RS, PT-RS, SRS, RIS dedicated signals, etc.). The RIS may transmit information about the following (2) meta-material function by using this transmission function.

A function to establish frame synchronization with the base station 10.

### (2) Meta-material functions:

A function to reflect (for example, change the phase of) signals transmitted from the base station 10 or the terminal 20. For example, a signal may be reflected by having its phase changed by each one of multiple reflecting elements that the RIS has, or may be reflected by having its phase changed in common by the multiple reflecting elements.

A function related to beam control (for example, a function related to TCI-state control, QCL control, selection and application of beams, selection and application of spatial filters/precoding weights, etc.).

A function to change (for example, amplify) the power of signals transmitted from the base station 10 or the terminal 20. The power of a signal may be changed differently per reflecting element included in the RIS, or changed in common by multiple reflecting elements.

To "receive and transmit" radio waves/signals in an RIS may mean reflecting radio waves/signals. Although the terms "base station" and "terminal" will be used hereinafter, these terms are by no means limiting and may be replaced with "communication device." The term "RIS" may be replaced with "smart repeater," "relay device," and so forth.

For example, the RIS may operate under the following assumptions (1) to (6):
(1) The network operator configures the RIS;
(2) The RIS is fixed and does not move;
(3) The RIS relays signals from only one base station;
(4) The RIS is capable of receiving and transmitting control signals;
(5) The RIS operates in half duplex mode; and
(6) The RIS is used in an environment where there is a single RIS.

Here, a wireless relay device such as a reflecting surface or a smart repeater that relays radio signals from a source of radio waves such as a base station to a recipient of the radio waves such as a terminal by reflecting or allowing the passage of the radio waves may be installed by a user other than a network operator. Allowing users to install wireless relay devices freely might lead to improvements in network environment that meet the users' needs. For example, a user may install a wireless relay device on a wall or window of a building to make it easier to use high frequency bands indoors. On the other hand, from the network's perspective, the relay function needs to be controlled by taking into account how wireless relay devices are installed.

So, an RIS may be discovered by the network. The network may then permit the discovered RIS to perform relay operation, and control the relay operation ON and OFF.

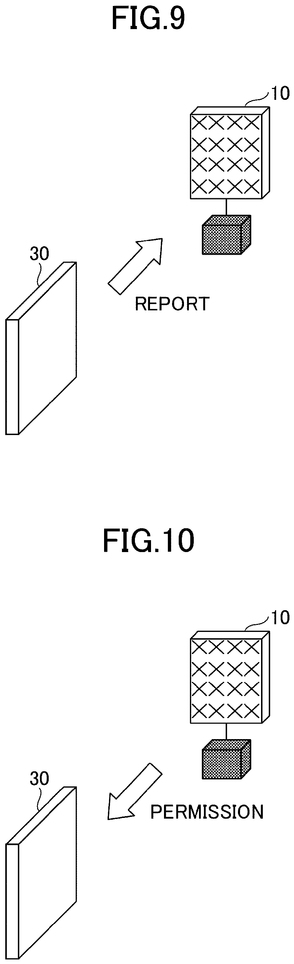

FIG. 9 is a diagram that illustrates an example (1) of operation of a wireless relay device according to an embodiment of the present invention. As shown in FIG. 9, the RIS 30 may send a report to a base station 10 by transmitting a signal that allows the base station 10 to identify the RIS 30.

The RIS 30 may discover base stations that can be synchronized/connected, or the RIS 30 may be discovered by synchronizable/connectable base stations. To establish synchronization/connection, the RIS 30 may perform a synchronization/connection operation with the base station 10. For example, the RIS 30 may establish synchronization based on SSBs transmitted from the base station 10, and transmit a connection request to the base station 10.

Regarding the initial connection between the base station 10 and the terminal 20, the RIS 30 may receive signals for initial connection transmitted from the base station 10 and the terminal 20 (beam control in the RIS 30). For example, the RIS 30 may determine the directivity of beams based on each SSB index. Also, when controlling beams in communication after the connection between the base station and the terminal is established (that is, when carrying out beam control based on control information from the base station 10), the RIS 30 may operate as follows. Note that the beam control may be carried out on a per UE basis.

The RIS 30 may receive/decode control information from the base station 10. For example, in order to perform beam control, the RIS 30 may receive/decode CSI information from the base station 10, and location information of the terminal 20 and/or the base station 10. The RIS 30 may also perform beam control based on control information received/decoded from the base station 10. For example, the RIS 30 may perform beam switching and the like when there are multiple terminals 20, or the RIS 30 may report communication-related information to the base station 10. The RIS 30 may also report the quality of communication on the RIS 30 side, to the base station 10.

Also, the RIS 30 may report, to the base station 10, information about at least one of following (1) to (9):
(1) Capabilities related to RIS functions;
(2) Information about the location of the RIS 30 (for example, global navigation satellite system (GNSS) information, latitude and longitude, altitude, area formation angle, direction/orientation, etc.);
(3) Information about the area the RIS 30 wants to or can build;
(4) PLMN that the RIS 30 wants to connect with;
(5) Frequency-domain resources and/or time-domain resources that the RIS 30 can relay (including TDD configuration, cross-division duplex (XDD) configuration, full duplex (FD) configuration, etc.);
(6) Radio properties of beams;
(7) Processing time required for beam switching;
(8) Information that indicates whether the RIS 30 was installed by the operator or by the user; and
(9) Channel state (information about the target frequency, the state of use of channels, interference power values/levels, other detectable base stations, propagation characteristic measurement values, etc.).

Note that the "channel state" of (9) above may refer to the state of channels between the RIS 30 and the base station 10, or the state of channels between the RIS 30 and the terminal 20.

By allowing the RIS 30 to report information such as those listed above to the base station 10, the network can decide whether or not to allow the RIS 30 to execute the relay function, so that it becomes possible to form areas efficiently and to substantially prevent interference from increasing.

FIG. 10 is a diagram that illustrates an example (2) of operation of a wireless relay device according to an embodiment of the present invention. As shown in FIG. 10, the RIS 30 may receive a signal that permits the RIS 30 to operate as an RIS, from the base station 10.

The RIS 30 may enable or disable its reflection or radiation function based on higher layer configuration and/or a physical layer indication from other network nodes. This higher layer configuration may refer to radio resource control (RRC) signaling or a medium access control control element (MAC-CE). The physical layer indication may be downlink control information (DCI) or uplink control information (UCI). To "enable" or "disable" as used herein may mean turning on or off the reflection or radiation function of the RIS 30, or may mean activating or deactivating its functions. Note that enablement of the RIS 30 and turning ON or activation of the reflection or radiation function of the RIS 30 may indicate that the base station 10 has permitted the RIS 30 to perform the relay operation.

For example, the following information elements (IEs) may be included in RRC signaling:

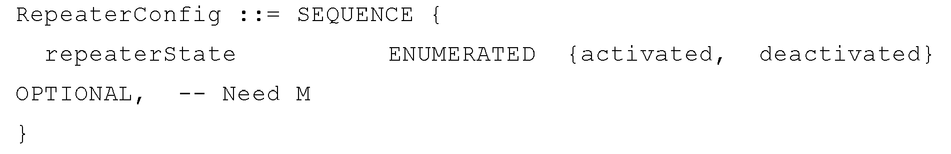

For example, the RIS 30 may control enablement or disablement based on configuration and/or an indication from the base station 10. The configuration and/or indication may refer to either the above-mentioned higher layer configuration or physical layer indication.

The base station 10 sends configuration and/or an indication related to the reflection/radiation function to the RIS 30. Subsequently, the RIS 30 enables or disables the reflection/radiation function based on the configuration and/or indication.
Hereinafter, "reflection/radiation" may mean "reflection or radiation" or "reflection and radiation."

For example, the RIS 30 may control enablement or disablement based on configuration and/or an indication from the terminal 20. The configuration and/or indication may be the above-mentioned higher layer configuration or physical layer indication.

The terminal 20 sends the configuration and/or indication related to the reflection/radiation function to the RIS 30. Subsequently, the RIS 30 enables or disables the reflection/radiation function based on the configuration and/or indication.

For example, the RIS 30 may control enablement or disablement of the reflection/radiation function based on configurations and/or indications from the base station 10 and the terminal 20. The configurations and/or indications may be the above-mentioned higher layer configuration or physical layer indication.

The base station 10 sends reflection/radiation function-related configuration and/or an indication to the RIS 30. The terminal 20 sends reflection/radiation function-related configuration and/or an indication to the RIS 30. The RIS 30 enables or disables the reflection/radiation function based on these configurations and/or indications.

If the same configuration and/or indication arrive from the base station 10 and the terminal 20, the configuration and/or indication may be applied to the RIS 30. For example, if the RIS 30 receives configuration and/or an indication for enablement from both the base station 10 and the terminal 20, the RIS 30 may enable the reflection/radiation function. If the RIS 30 receives configuration and/or an indication for disablement from both the base station 10 and the terminal 20, the RIS 30 may disable the reflection/radiation function.

Also, the RIS 30 may autonomously decide whether to enable or disable the reflection/radiation function. For example, if the RIS 30 receive no configuration and/or indication related to the reflection/radiation function from the base station 10 or the terminal 20, the RIS 30 may perform a predetermined autonomous operation.

When the RIS 30 controls enablement or disablement of the reflection/radiation function based on higher layer configuration and/or an indication from the base station 10 or the terminal 20, the state of enablement or disablement may be directly configured semi-statically. Alternatively, the duration of the state of enablement or disablement may be configured semi-statically.

When enablement or disablement of the reflection/radiation function is dynamically indicated by a physical layer control signal (for example, a PDCCH or a PUCCH) from the base station 10 or the terminal 20, the period of time after the physical layer control signal is received, until the reflection/radiation function is enabled or disabled, may be specified by the specification, or indicated by the physical layer control signal, or a minimum time may be specified. The RIS 30 then need not assume that a time that is shorter than the minimum time is specified.

In the event enablement or disablement of the reflection/radiation function is dynamically indicated by a physical layer control signal (for example, a PDCCH or a PUCCH) from the base station 10 or the terminal 20, when the RIS 30 reflects/radiates a PDCCH that includes a DL grant, the reflection/radiation function may be disabled after a PDSCH scheduled by the DL grant and a PUCCH are reflected/radiated.

In the event enablement or disablement of the reflection/radiation function is dynamically indicated by a physical layer control signal (for example, a PDCCH or a PUCCH) from the base station 10 or the terminal 20, when the RIS 30 reflects/radiates a PDCCH that includes a UL grant, the reflection/radiation function may be disabled after a PUCCH scheduled by the UL grant is reflected/radiated.

The RIS 30 may enable or disable the reflection/radiation function when a configured UL signal triggered by the terminal 20 is detected. That is, the RIS 30 may use a UL signal from the terminal 20 as a wake-up signal (WUS) .

If the signal from the terminal 20 that indicates enablement or disablement of the reflection/radiation function is determined to be valid by the base station 10 and/or the terminal 20, the RIS 30 may enable or disable the reflection/radiation function when this signal is detected. That is, a UL signal and a WUS from the terminal 20 may be transmitted on separate occasions. The terminal 20 may constantly transmit the signal before performing UL transmission, or the terminal 20 may transmit the signal only when the reflection/radiation function of the RIS 30 is disabled.

The RIS 30 determines whether or not a predetermined signal's received quality is greater than or equal to a threshold. If the received quality of the predetermined signal is greater than or equal to the threshold, the RIS 30 may enable the reflection/radiation function.

The RIS 30 determines whether the or not the predetermined signal's received quality is less than or equal to the threshold. If the received quality of the predetermined signal is greater than or equal to the threshold, the RIS 30 may disable the reflection/radiation function.

The predetermined signal may be an SSB from the base station 10, a TRS from the base station 10, or an SRS from the terminal 20. A signal for measuring received quality may be specified or configured as this predetermined signal. The received quality here may be the reference signal received power (RSRP), reference signal received quality (RSRQ), or signal-to interference plus noise ratio (SINR). The threshold may be defined in the specification, or may be configured from another node. Also, hysteresis may be set for this threshold. Given occasions for measuring the received quality of a predetermined signal specified or configured thus, the reflection/radiation function may be enabled if the predetermined signal's measured received quality exceeds the threshold N times in a row. If the predetermined signal's measured received quality falls below the threshold N times in a row, the reflection/radiation function may be disabled.

The RIS 30 may control enablement and disablement of the reflection/radiation function the same between DL and UL, or control enablement and disablement of the reflection/radiation function independently between DL and UL.

Whether the reflection/radiation function is controlled the same or independently between DL and UL may be specified in the specification, or may be configured or indicated from another node. In the event DL and UL are controlled the same, for example, higher layer configuration from the base station 10 may indicate the same control. Alternatively, the same control may be indicated by a physical layer control signal from the base station 10, indicated by higher layer configuration from the terminal 20, or indicated by a physical layer control signal from the terminal 20.

In the event DL and UL are controlled independently, for example, DL may be controlled based on higher layer configuration from the base station 10, and UL may be controlled based on a physical layer control signal from the terminal 20. Also, DL may be controlled based on a physical layer control signal from the base station 10, and UL may be controlled based on a physical layer control signal from the terminal 20. Also, DL may be controlled by a physical layer control signal from the base station 10, and UL may be controlled based on higher layer configuration from the terminal 20. Furthermore, DL may be controlled based on higher layer configuration from the base station 10, and UL may be controlled based on higher layer configuration from the terminal 20.

The RIS 30 may reflect/radiate all signals from the base station 10 and the terminal 20 while the reflection/radiation function is enabled. The period that the reflection/radiation function of the RIS 30 is enabled may be the period in which RRC connection is established with the base station 10, or the period in which RRC connection is established with the terminal 20. For example, as in connected mode DRX (CDRX) with the base station 10, when a WUS is received on a PDCCH monitoring occasion (MO), the RIS 30 keeps its reflection/radiation function enabled. On the other hand, when no WUS is received, the reflection/radiation function of the RIS 30 may be kept disabled until the next MO.

The RIS 30 does not have to reflect/radiate signals from the base station 10 and the terminal 20 when the reflection/radiation function is disabled. The period that the reflection/radiation function is disabled may be the period in which the RRC state with the base station 10 is RRC idle or RRC inactive mode, or the period in which the RRC state with the terminal 20 is RRC idle or RRC inactive mode. For example, if a paging early indication (PEI), which is a WUS, is received in the main circuit before a paging occasion (PO), the reflection/radiation function may be kept enabled until the next PEI. If no PEI is received, the reflection/radiation function may be disabled until the next PEI. If the reflection/radiation function of the main circuit is disabled and a WUS is received in a passive circuit dedicated to WUS reception, the reflection/radiation function of the main circuit may be enabled.

The RIS 30 may enable or disable the reflection/radiation function in conjunction with the state of the terminal 20, with which the RSI 30 is connected or whose signals the RIS 30 reflects/radiates, in terms of RRC connection state with the base station 10.

The RIS 30 may switch the enablement or disablement of the reflection/radiation function according to an indication from the terminal 20 with which the RSI 30 is connected or whose signals the RIS 30 reflects/radiates. For example, when the terminal 20 detects a UL signal that can be transmitted in RRC idle mode or inactive mode, the state of enablement or disablement of reflection/radiation may be changed, and, for example, the reflection/radiation function may be enabled. That is, a UL signal from the terminal 20 may be used as a WUS.

The UL signal may be the PRACH in 4-step random access procedures, MsgA in 2-step random access procedures, CG-PUSCH in small data transmission (SDT), and so forth. Also, if the UL signal is determined to be valid by the base station 10 and/or the terminal 20, the RIS 30 may enable or disable the reflection/radiation function when the signal is detected. That is, a UL signal and a WUS from the terminal 20 may be transmitted on separate occasions. The terminal 20 may constantly transmit the signal before performing UL transmission, or the terminal 20 may transmit the signal only when the reflection/radiation function of the RIS 30 is disabled.

Also, the RIS 30 may be permitted to operate as an RIS if a higher layer parameter for operation as an RIS is received. Also, the RIS 30 may assume that it is permitted to operate as an RIS when connection or communication with the base station 10 is established. Also, in the event RRC signaling, MAC-CE, or DCI reporting for permitting relay operation is defined, the RIS 30 may assume that RIS operation is permitted when this signaling is received.

The signal for permitting relay operation may include information of/about the following (1) to (4):
(1) Parameter related to applicable beam configuration;
(2) Parameter related to power control;
(3) Parameter related to the time, frequency, space, and/or code resources in which relay operation is permitted; and
(4) Parameter related to the frequency at which relay operation is permitted (for example, the band, band combination, carrier component, frequency range, etc.).

As described above, the base station 10 allows the RIS 30 to perform relay operation, so that only RISs 30 that the network determines should execute the relay function can execute relay operation, and it becomes possible to form areas efficiently and to substantially prevent interference from increasing.

The RIS 30 may request the base station 10 for (A) permission to operate as an RIS, or (B) indication for enablement of the RIS function. (A) Permission to operate as an RIS may be requested before the base station 10 permits the RIS 30 to perform the relay operation. (B) The indication for enabling the RIS function may be requested after the base station 10 described above permits the RIS 30 to perform the relay operation.

The RIS 30 may include, explicitly or implicitly, a signal for requesting above (A) or above (B) in transmission during the operation for establishing connection/communication with the base station 10.

Also, the RIS 30 may include, explicitly or implicitly, a signal for requesting above (A) or (B) in a signal for allowing the base station 10 to identify the RIS 30.

In the event RRC signaling, MAC-CE, and DCI reporting for requesting (A) or (B) above is defined, the RIS 30 may transmit the signaling to the base station 10 based on a predetermined condition.

For example, the RIS 30 may autonomously transmit the signaling to the base station 10. To illustrate an example of this predetermined condition, the RIS 30 may transmit the signaling to the base station 10 if the RIS 30 is in a state in which it is ready to implement the RIS function. For example, the RIS 30 may determine whether or not to transmit the signaling based on a signal (for example, an SSB-RSRP) received from the base station 10. For example, to illustrate another example, the RIS 30 may transmit the signaling to the base station 10 if the SSB-RSRP is greater than or equal to a threshold. For example, the RIS 30 may determine whether or not to transmit the signaling based on its surrounding environment as measured by the RIS 30 (for example, channel state, the number of UEs, request from the UEs, etc.). In yet another example of the predetermined condition, the RIS 30 may transmit the signaling to the base station 10 when a request is received from a UE.

As described above, the RIS 30 transmits a request for execution of relay operation to the base station 10, so that it is possible to ask the network to use only RISs that are installed based on users' needs, and build areas on an on-demand basis.

According to the embodiment described above, even if an RIS 30 is installed by a user, the RIS 30 can still report necessary information to the base station 10 and let the network decide whether or not to allow the RIS 30 to perform relay operation, so that it is possible to adequately relay signals and improve the quality of communication.

That is, in a wireless communication system, relay operation can be controlled by taking into account how wireless relay devices are installed.

### (Hardware structure)

The block diagrams (FIG. 2, FIG. 3, and FIG. 4) used to describe the above embodiments show blocks in functional units. These functional blocks (components) are implemented by any combination of hardware and/or software. In addition, the method of implementing each functional block is not particularly limited. That is, each functional block may be implemented by using a single device that is physically or logically combined, or two or more devices that are physically or logically separated may be directly or indirectly connected (for example, by using a cable, radio, etc.), and each functional block may be implemented using these multiple devices. The functional blocks may be implemented by combining software with the device or devices.

The functions include, but are not limited to, judgment, determination, decision, calculation, computation, processing, derivation, research, search, verification, reception, transmission, output, access, resolution, selection, choosing, establishment, comparison, assumption, assumption, deeming, broadcasting, notifying, communicating, forwarding, configuring, reconfiguring, allocating, mapping, and assigning. For example, a functional block (component) that performs a transmission function is referred to as a "transmitting unit" or a "transmitter." In either case, as mentioned earlier, the method of implementation is not particularly limited.

For example, the base station 10, terminal 20, wireless relay device 30 and so forth according to the embodiments of the present disclosure may function as a computer for processing the wireless communication method of the present disclosure. FIG. 15 is a diagram that illustrates an example hardware structure of the base station 10, terminal 20, and wireless relay device 30 according to the embodiments of the present disclosure. The base station 10, terminal 20, and wireless relay device 30 described above may be physically configured as a computer device including a processor 1001, a storage device 1002, an auxiliary storage device 1003, a communication device 1004, an input device 1005, an output device 1006, a bus 1007, and so forth.

In the following description, the term "device" can be read as circuit, apparatus, unit, and so forth. The hardware structure of the base station 10, terminal 20, and wireless relay device 30 may be configured to include one or more of the devices illustrated in the drawings, or may be configured without some of the devices.

The functions of the base station 10, terminal 20, and wireless relay device 30 are realized by performing operations by the processor 1001 by reading predetermined software (programs) on hardware such as the processor 1001 and the storage device 1002, controlling communication by the communication device 1004, and controlling at least one of reading and writing of data in the storage device 1002 and the auxiliary storage device 1003.

The processor 1001 operates, for example, an operating system to control the entire computer. The processor 1001 may be composed of a central processing unit (CPU) including an interface with peripheral devices, a control device, an arithmetic device, a register, and the like. For example, the above-described control unit 140, control unit 240, and the like may be implemented by the processor 1001.

The processor 1001 reads out programs (program codes), software modules, data, or the like from at least one of the auxiliary storage device 1003 and the communication device 1004 to the storage device 1002, and performs various processes in accordance with the above. As for the programs, programs that cause the computer to execute at least part of the operations described in the above embodiments may be used. For example, the control unit 140 of the base station 10 illustrated in FIG. 2 may be stored in the storage device 1002 and implemented by control programs that operate on the processor 1001. For example, the control unit 240 of the terminal 20 illustrated in FIG. 3 may be stored in the storage device 1002 and implemented by control programs that operate on the processor 1001. Although the foregoing processes have been described and executed by one processor 1001, they may be executed simultaneously or sequentially by two or more processors 1001. The processor 1001 may be implemented by one or more chips. The programs may be transmitted from the network via a telecommunication line.

The storage device 1002 is a computer-readable recording medium and may be composed of at least one of, for example, a read-only memory (ROM), an erasable programmable ROM (EPROM), an electrically erasable programmable ROM (EEPROM), a random access memory (RAM), and the like. The storage device 1002 may be referred to as a register, cache, main memory (main storage device), or the like. The storage device 1002 can store programs (program codes), software modules, and so forth, executable to implement the communication method according to the embodiments of the present disclosure.

The auxiliary storage device 1003 is a computer-readable recording medium and may be composed of at least one of an optical disk, such as a compact disc ROM (CD-ROM), a hard disk drive, a flexible disk, a magneto-optical disk (for example, a compact disc, a digital versatile disc, a Blu-ray disc (registered trademark), etc.), a smart card, a flash memory (for example, a card, a stick, a key drive), a floppy disk (registered trademark), a magnetic strip, and the like. The storage medium described above may be, for example, a database, a server, or other suitable medium that includes at least one of a storage device 1002 and an auxiliary storage device 1003.

The communication device 1004 is hardware (a transceiving device) for performing communication between computers via at least one of a wired network and a wireless network, and is also referred to as a "network device," a "network controller," a "network card," a "communication module," or the like. The communication device 1004 may be composed of a high frequency switch, a duplexer, a filter, a frequency synthesizer, or the like, for example, to implement at least one of frequency division duplex (FDD) and time division duplex (TDD). For example, the transmitting/receiving antenna, the amplifier unit, the transceiving unit, the transmission line interface, and the like may be implemented by the communication device 1004. The transceiving unit may be physically or logically isolated, respective implementations of a transmitting unit and a receiving unit.

The input device 1005 is an input device (for example, a keyboard, a mouse, a microphone, a switch, a button, a sensor, etc.) that accepts external input. The output device 1006 is an output device (for example, a display, a speaker, an LED lamp, etc.) that implements external output. The input device 1005 and the output device 1006 may have an integral structure (for example, a touch panel).

Each device, such as the processor 1001 and the storage device 1002, is connected by a bus 1007 for communicating information. The bus 1007 may be constructed using a single bus or may be constructed using different buses between devices.

The base station 10, terminal 20, and wireless relay device 30 may also include hardware such as a microprocessor, a digital signal processor (DSP), an application-specific integrated circuit (ASIC), a programmable logic device (PLD), a field programmable gate array (FPGA), and so forth, and some or all of the functional blocks may be implemented by the hardware. For example, the processor 1001 may be implemented by using at least one of these hardware components.

Furthermore, the wireless relay device 30 may include a variable phase shifter, a phase changer, an amplifier, an antenna, an antenna array, and so forth, as hardware constituting the change unit 340 and the antenna unit 350, as necessary.

FIG. 16 shows an example structure of a vehicle 2001. As shown in FIG. 16, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021 to 2029, an information service unit 2012, and a communication module 2013. The embodiments and examples described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the sensors 2021 to 2029 provided in the vehicle 2001. The electronic control unit 2010 may be referred to as an "electronic control unit" (ECU).

The signals from the sensors 2021 to 2029 include a current signal from a current sensor 2021 that senses the current of the motor, a front or rear wheel rotation speed signal acquired by a rotation speed sensor 2022, a front or rear wheel air pressure signal acquired by an air pressure sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, a shift lever operation signal acquired by a shift lever sensor 2027, and a detection signal, acquired by an object detection sensor 2028, for detecting an obstacle, a vehicle, a pedestrian, and the like.

The information service unit 2012 includes various devices for providing various information such as driving information, traffic information, and entertainment information, including a car navigation system, an audio system, a speaker, a television, and a radio, and one or more ECUs that control these devices. The information service unit 2012 provides various multimedia information and multimedia services to the occupants of the vehicle 2001 by using information obtained from external devices through the communication module 2013 or the like.

A driver assistance system unit 2030 includes: various devices for providing functions of preventing accidents and reducing the driver's burden of driving, such as a millimeter wave radar, a light detection and ranging (LiDAR) system, a camera, a positioning locator (for example, GNSS), map information (for example, high definition (HD) map, autonomous vehicle (AV) map, etc.), a gyro system (for example, an inertial measurement unit (IMU), an inertial navigation system (INS), etc.), an artificial intelligence (AI) chip, and an AI processor; and one or more ECUs that control these devices. In addition, the driver assistance system unit 2030 transmits and receives various information via the communication module 2013 to implement a driver assistance function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031, the memory (ROM, RAM) 2032 in the electronic control unit 2010, and the sensors 2021 to 29 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through wireless communication. The communication module 2013 may be internal or external to the electronic control unit 2010. The external devices may include, for example, a base station, a mobile station, or the like.

The communication module 2013 transmits a current signal, which is input to the electronic control unit 2010 from the current sensor, to the external devices through wireless communication. In addition, the communication module 2013 also transmits, to the external devices, through wireless communication, the front or rear wheel rotation speed signal acquired by the rotation speed sensor 2022, the front or rear wheel air pressure signal acquired by the air pressure sensor 2023, the vehicle speed signal acquired by the vehicle speed sensor 2024, the acceleration signal acquired by the acceleration sensor 2025, the stepped-on accelerator pedal signal acquired by the accelerator pedal sensor 2029, the stepped-on brake pedal signal acquired by the brake pedal sensor 2026, the shift lever operation signal acquired by the shift lever sensor 2027, and the detection signal, acquired by the object detection sensor 2028, for detecting an obstacle, a vehicle, a pedestrian, and the like, that are input to the electronic control unit 2010.

The communication module 2013 receives various information (traffic information, signal information, inter-vehicle information, etc.) transmitted from the external devices and displays the received information on the information service unit 2012 provided in the vehicle 2001. In addition, the communication module 2013 stores the information received from the external devices in the memory 2032, to which the microprocessor 2031 has access. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021 to 2029, and so forth, mounted in the vehicle 2001.

### (Summary of embodiment)

As described above, according to an embodiment of the present invention, a wireless relay device is provided. This wireless relay device includes: a transmitting unit configured to transmit, to a base station, a first signal for allowing the base station to identify the wireless relay device; a receiving unit configured to receive, from the base station, a second signal about a permission to operate as a wireless relay device; and a control unit configured to enable, when the receiving unit receives the second signal, a relay function that allows a signal received from the base station to be transmitted to a terminal and a signal received from the terminal to be transmitted to the base station.

Given the above structure, even if the RIS 30 is installed by a user, the RIS 30 can still report necessary information to the base station 10 and let the network decide whether or not to allow the RIS 30 to perform relay operation, so that the RIS 30 can relay signals adequately and improve the quality of communication. That is, in a wireless communication system, relay operation can be controlled by taking into account how wireless relay devices are installed.

The transmitting unit may transmit, to the base station, a third signal that represents a request for enabling the relay function. Given this structure, even when the RIS 30 is installed by a user, the RIS 30 can still report necessary information to the base station 10, and improve the quality of communication.

The transmitting unit may include, in the first signal, information about a channel state in communication between the wireless relay device and the base station or the terminal. Given the above structure, even if the RIS 30 is installed by a user, the RIS 30 can still report necessary information to the base station 10 and let the network decide whether or not to allow the RIS 30 to perform relay operation, so that the RIS 30 can relay signals adequately and improve the quality of communication.

The receiving unit may obtain, from the second signal, a parameter related to a beam configuration that is applicable to the relay function. Given the above structure, even if the RIS 30 is installed by a user, the RIS 30 can still receive necessary information from the base station 10 and let the network decide whether or not to allow the RIS 30 to perform relay operation, so that the RIS 30 can relay signals adequately and improve the quality of communication.

The transmitting unit may transmit, to the base station, the first signal with the third signal included therein. Given the above structure, even if the RIS 30 is installed by a user, the RIS 30 can still report necessary information to the base station 10 and improve the quality of communication.

Furthermore, in accordance with an embodiment of the present invention, a communication method that is executed by a wireless relay device is provided. This communication method includes: transmitting, to a base station, a first signal for allowing the base station to identify the wireless relay device; receiving, from the base station, a second signal about a permission to operate as a wireless relay device; and enabling, when the second signal is received, a relay function that allows a signal received from the base station to be transmitted to a terminal and a signal received from the terminal to be transmitted to the base station.

Given the above structure, even if the RIS 30 is installed by a user, the RIS 30 can still report necessary information to the base station 10 and let the network decide whether or not to allow the RIS 30 to perform relay operation, so that the RIS 30 can relay signals adequately and improve the quality of communication. That is, in a wireless communication system, relay operation can be controlled by taking into account how wireless relay devices are installed.

### (Notes on embodiments)

Example embodiments of the present invention have been described above, but the disclosed invention is not limited to the above embodiments, and those skilled in the art would understand that there may be various modified examples, revised examples, alternative examples, substitution examples, and the like. In order to facilitate understanding of the invention, specific numerical values have been used for description, but the numerical values are merely examples, and any suitable values may be used unless otherwise specified. The classification of items in the above description is not essential to the present invention. Matters described as two or more items may be combined if necessary, and a matter described as one item may be applied to another item (as long as there is no contradiction). The boundary between functional units or processing units in a functional block diagram does not necessarily correspond to the boundary between physical parts. Operations of multiple functional units may be performed physically by one component, or an operation of one functional unit may be physically performed by multiple parts. In the processing procedures described in the embodiments, the order of the processes may be changed as long as there is no contradiction. For the sake of convenience of processing description, the base station 10 and the terminal 20 are described using functional block diagrams, but such devices may be implemented by hardware, software, or a combination of these. Software executed by the processor included in the base station 10 according to the embodiments of the present invention and software executed by the processor included in the terminal 20 according to the embodiments of the present invention may be stored in a random access memory (RAM), a flash memory, a read-only memory (ROM), an EPROM, an EEPROM, a register, an hard disk drive (HDD), a removable disk, a CD-ROM, a database, a server, or any other appropriate storage medium.

Furthermore, notification of information is not limited to the embodiments or examples described in the present disclosure, and may be provided by using any other method. For example, the notification of information may be provided by physical layer signaling (for example, downlink control information (DCI) or uplink control information (UCI)), higher layer signaling (for example, radio resource control (RRC) signaling, medium access control (MAC) signaling, broadcast information (master information block (MIB), system information block (SIB), etc.), other signals, or a combination thereof. Furthermore, RRC signaling may be referred to as an "RRC message" and may be, for example, an RRC connection setup message, an RRC connection reconfiguration message, or the like.

Each embodiment and example described in the present disclosure may be applied to at least one of long-term evolution (LTE), LTE-advanced (LTE-A), SUPER 3G, IMT-Advanced, 4th generation mobile communication system (4G), 5th generation mobile communication system (5G), 6th generation mobile communication system (6G), x-th generation mobile communication system (xG) (where "x" is an integer, decimal, etc.), future radio access (FRA), new radio (NR), new radio access (NX), future generation radio access, W-CDMA (registered trademark), GSM (registered trademark), CDMA 2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), a system using any other appropriate system, and next generation systems enhanced, modified, created, and defined based on these standards. Furthermore, multiple systems (for example, a combination of at least one of LTE and LTE-A, with 5G) may be combined to be applied.

The order of the processing procedures, the order of the sequences, the order of the flowcharts, and the like of the respective embodiments and examples described in this specification may be changed, provided that there is no contradiction. For example, the method described in the present disclosure presents elements of various steps with an example order and is not limited to the presented, specific order.

In this specification, a specific operation to be performed by the base station 10 may be performed by its upper node in some cases. In a network including one or more network nodes including the base station 10, various operations performed for communication with the terminal 20 can be obviously performed by at least one of the base station 10 and any network node (for example, an MME, an S-GW, and so forth, but these are by no means limiting) other than the base station 10. Cases have been shown above in which there is one network node other than the base station 10. The one network node may be a combination of multiple other network nodes (for example, MME and S-GW).

Information, a signal, or the like described in the present disclosure may be output from a higher layer to a lower layer (or from a lower layer to a higher layer). Information, a signal, or the like described in the present disclosure may be input and output via multiple network nodes.

Input and output information and the like may be stored in a specific place (for example, a memory), or may be managed by using a management table. Input and output information and the like may be overwritten, updated, or additionally written. Output information and the like may be deleted. Input information and the like may be transmitted to other devices.

The determination in the present disclosure may be made in accordance with a value (0 or 1) represented by one bit, may be made in accordance with a Boolean value (Boolean: true or false), or may be made by a comparison of numerical values (for example, a comparison with a predetermined value).

Software should be broadly interpreted to mean a command, a command set, a code, a code segment, a program code, a program, a subprogram, a software module, an application, a software application, a software package, a routine, a subroutine, an object, an executable file, an execution thread, a procedure, a function, and the like, regardless of whether software is called "software," "firmware," "middleware," a "microcode," a "hardware description language," or any other name.

Furthermore, software, commands, information, and the like may be transmitted and received via a transmission medium. For example, when software is transmitted from a web site, a server, or any other remote source using a wired technology (such as a coaxial cable, a fiber optic cable, a twisted pair, or a digital subscriber line (DSL)) and a radio technology (such as infrared rays or a microwave), at least one of the wired technology and radio technology is included in a definition of a transmission medium.

Information, signals, and the like described in the present disclosure may be expressed using any one of a variety of techniques. For example, data, instructions, commands, information, signals, bits, symbols, chips, and the like, which are mentioned throughout the above description, may be expressed by voltages, currents, electromagnetic waves, magnetic fields or magnetic particles, optical fields or photons, or any combination thereof.

The terms described in the present disclosure and the terms necessary for understanding the present disclosure may be replaced with terms having the same or similar meanings. For example, at least one of a channel and a symbol may be a signal (signaling). Furthermore, a signal may be a message. Furthermore, a component carrier (CC) may be referred to as a "carrier frequency," a "cell," a "frequency carrier," or the like.

The terms "system" and "network" used in the present disclosure are interchangeable.

Furthermore, the information, parameters, and the like described in the present disclosure may be expressed by using absolute values, may be expressed by using relative values from predetermined values, or may be expressed by using any other corresponding information. For example, radio resources may be indicated by indices.

The names used for the above-described parameters are not limited names in any point of view. Furthermore, mathematical formulas or the like using the parameters may be different from those explicitly disclosed in the present disclosure. Since various channels (for example, PUCCH, PDCCH, etc.) and information elements can be identified by any suitable names, various names assigned to the various channels and the information elements are not limited names in any point of view.

In the present disclosure, the terms "base station (BS)," "radio base station," "fixed station," "NodeB," "eNodeB (eNB)," "gNodeB (gNB)," "access point," "transmission point," "reception point," "transmission/reception point," "cell," "sector," "cell group," "carrier," "component carrier," and the like can be used interchangeably. The base station may also be referred to by a term such as a "macrocell," a "small cell," a "femtocell," and a "picocell."

The base station can accommodate one or more (for example, three) cells. In a case in which the base station accommodates multiple cells, the entire coverage area of the base station can be partitioned into a plurality of small areas, and each small area can provide a communication service through a base station subsystem (for example, a small indoor base station (RRH: Remote Radio Head)). The term "cell" or "sector" refers to the whole or a part of the coverage area of at least one of the base station and the base station subsystem that performs a communication service in the coverage.

In the present disclosure, the terms "mobile station (MS)," "user terminal," "user equipment (UE)," "terminal," and the like can be used interchangeably.

The mobile station may be referred to, by a person ordinarily skilled in the art, as a "subscriber station," a "mobile unit," a "subscriber unit," a "wireless unit," a "remote unit," a "mobile device," a "wireless device," a "wireless communication device," a "remote device," a "mobile subscriber station," an "access terminal," a "mobile terminal," a "wireless terminal," a "remote terminal," a "handset," a "user agent," a "mobile client," a "client," or some other suitable terms.

At least one of the base station and the mobile station may be also referred to as a "transmission device," a "receiving device," a "communication device," or the like. At least one of the base station and the mobile station may be a device installed in a mobile body, a mobile body itself, or the like. The mobile body may be a vehicle (for example, a car, an airplane, etc.), an unmanned body that moves (for example, a drone, an autonomous car or the like), or a robot (manned type or unmanned type). At least one of the base station and the mobile station includes a device that need not move during communication operation. For example, at least one of the base station and the mobile station may be an Internet of things (IoT) device such as a sensor.

Furthermore, the base station in the present disclosure may be replaced by the user terminal. For example, various embodiments and examples of the present disclosure may be applied to a configuration in which communication between the base station and the user terminal is replaced by communication between multiple terminals 20 (such communication may be referred to as "device-to-device (D2D)" communication, "vehicle-to-everything (V2X)" communication, etc.). In this case, the terminals 20 may have and perform the functions that the base station 10 described above has. The phrases "uplink" and "downlink" may also be replaced by phrases corresponding to terminal-to-terminal communication (for example, "side"). For example, an uplink channel, a downlink channel, or the like may be replaced by a side channel.

Similarly, the user terminal in the present disclosure may be replaced with the base station. In this case, the base station may have the functions of the above-described user terminal.

The terms "determination (determining)" and "decision (determining)" used in the present specification may include various types of operations. The "determination" and "decision" may include deeming "judging," "calculating," "computing," "processing," "deriving," "investigating," "looking up (for example, searching in a table, a database, or another data structure)," "searching," "inquiring," or "ascertaining" as "determining" and/or "deciding." Furthermore, the "determination" and "decision" may include deeming "receiving (for example, receiving information)," "transmitting (for example, transmitting information)," "inputting," "outputting," or "accessing (for example, accessing data in a memory)" as "determining" and/or "deciding." Furthermore, the "determination" and "decision" may include deeming "resolving," "selecting," "choosing," "establishing," or "comparing" as "determining" and/or "deciding." Namely, the "determination" and "decision" may include deeming an operation as "determining" and/or "deciding." Furthermore, "determining" may be replaced with "assuming," "expecting," "considering," or the like.

The terms "connected," "coupled," or variations thereof may mean any direct or indirect connection or coupling between two or more elements and may include the presence of one or more intermediate elements between two elements which are "connected" or "coupled." The coupling or the connection between the elements may be physical, logical, or a combination thereof. For example, "connection" may be replaced with "access." In the present disclosure, two elements may be considered to be "connected" or "coupled" with each other using at least one of one or more electric wires, cables and/or a printed electrical connection or using electromagnetic energy having a wavelength in a radio frequency region, a microwave region, or a light (both visible and non-visible) region as nonlimiting and non-exhaustive examples.

A reference signal may be abbreviated as "RS" and may be referred to as a "pilot," depending on the standard that is applied.

The phrase "based on" used in the present disclosure does not only mean "based only on," unless otherwise stated. In other words, the phrase "based on" means both "based only on" and "based at least on."

Any reference to an element using a designation such as "first" or "second," used in the present disclosure, does not generally restrict quantities or the order of those elements. Such designation can be used in the present disclosure as a convenient method of distinguishing between two or more elements. Thus, reference to the first and second elements does not mean that only two elements can be adopted there or that the first element must precede the second element in a certain way.

Furthermore, "means" in the structure of each of the above devices may be replaced with "unit," "part," "circuit," "device," or the like.

When "include," "including," and variations thereof are used in the present disclosure, these terms are intended to be comprehensive, similar to the term "provided with (comprising)." Furthermore, the term "or" used in the present disclosure is intended not to be an exclusive OR.

A radio frame may include one or more frames in the time domain. In the time domain, each of one or more frames may be referred to as a "subframe." The subframe may further include one or more slots in the time domain. The subframe may have a fixed time length (for example, 1 ms) not depending on numerology.

Numerology may be a communication parameter applied to at least one of transmission and reception of a certain signal or channel. For example, numerology may indicate at least one of subcarrier spacing (SCS), the bandwidth, the symbol length, the cyclic prefix length, the transmission time interval (TTI), the number of symbols per TTI, the radio frame structure, a specific filtering process performed in the frequency domain by a transceiver, a specific windowing process performed in the time domain by a transceiver, and the like.

A slot may include one or more symbols (orthogonal frequency division multiplexing (OFDM) symbols, single carrier frequency division multiple access (SC-FDMA) symbols, etc.) in the time domain. A slot may be a time unit based on numerology.

A slot may include a plurality of mini slots. Each mini slot may include one or more symbols in the time domain. Furthermore, a mini slot may be referred to as a "sub-slot." A mini slot may include fewer symbols than a slot. PDSCH (or PUSCH) that is transmitted in a unit of time greater than a mini slot may be referred to as "PDSCH (or PUSCH) mapping type A." PDSCH (or PUSCH) that is transmitted using a mini slot may be referred to as "PDSCH (or PUSCH) mapping type B."

Any one of a radio frame, a subframe, a slot, a mini slot, and a symbol indicates a time unit for transmitting a signal. As a radio frame, a subframe, a slot, a mini slot, and a symbol, different names corresponding to them may be used.

For example, one subframe may be referred to as a "transmission time interval (TTI)," or a plurality of consecutive subframes may be referred to as a "TTI," or one slot or one mini slot may be referred to as a "TTI." In other words, at least one of the subframe and the TTI may be a subframe (1 ms) in conventional LTE, may be a period shorter than 1 ms (for example, 1 to 13 symbols), or may be a period longer than 1 ms. A unit representing the TTI may be referred to as a "slot," a "mini slot," or the like, instead of a "subframe."

Here, for example, the TTI refers to a minimum time unit of scheduling in wireless communication. For example, in an LTE system, the base station performs scheduling of allocating radio resources (frequency bandwidth, transmission power, or the like which can be used in each terminal 20) to each terminal 20 in units of TTIs. The definition of the TTI is not limited thereto.

The TTI may be a transmission time unit such as a channel-coded data packet (transport block), a code block, or a codeword, or may be a processing unit of, for example, scheduling or link adaptation. Furthermore, when a TTI is provided, the time interval (for example, the number of symbols) in which a transport block, a code block, a codeword, or the like is actually mapped may be shorter than the TTI.

When one slot or one mini slot is referred to as a "TTI," one or more TTIs (that is, one or more slots or one or more mini slots) may be a minimum time unit of scheduling. Furthermore, the number of slots (the number of mini slots) forming the minimum time unit of scheduling may be controlled.

A TTI having a time length of 1 ms may be referred to as a "common TTI" (TTI in LTE Rel. 8 to 12), a "normal TTI," a "long TTI," a "common subframe," a "normal subframe," a "long subframe," a "slot," or the like. A TTI shorter than a common TTI may be referred to as a "reduced TTI," a "short TTI," a "partial TTI" (a partial or fractional TTI), a "reduced subframe," a "short subframe," a "mini slot," a "sub slot," a "slot," or the like.

Furthermore, a long TTI (for example, a normal TTI, a subframe, etc.) may be replaced with a TTI having a time length exceeding 1 ms, and a short TTI (for example, a reduced TTI or the like) may be replaced with a TTI having a TTI length that is shorter than a TTI length of a long TTI and that is longer than or equal to 1 ms.

The resource block (RB) is a resource allocation unit in the time domain and the frequency domain, and may include one or more consecutive subcarriers in the frequency domain. The number of subcarriers included in an RB may be the same, irrespective of the numerology and may be, for example, 12. The number of subcarriers included in an RB may be determined based on numerology.

Furthermore, the time range of an RB may include one or more symbols and may have a length of one slot, one mini slot, one subframe, or one TTI. One TTI, one subframe, or the like may be formed with one or more resource blocks.

Furthermore, one or more RBs may be referred to as a "physical resource block (PRB)," a "subcarrier group (SCG)," a "resource element group (REG)," a "PRB pair," an "RB pair," or the like.

Furthermore, a resource block may be formed with one or more resource elements (REs). For example, one RE may be a radio resource field of one subcarrier and one symbol.

A bandwidth part (BWP) (which may be referred to as a "partial bandwidth" or the like) may indicate a subset of consecutive common resource blocks (RBs) for a certain numerology in a certain carrier. Here, a common RB may be specified by an index of an RB based on a common reference point of a carrier. A PRB may be defined in a BWP and numbered in a BWP.

The BWP may include BWP for UL (UL BWP) and BWP for DL (DL BWP). In the terminal 20, one or more BWPs may be configured in one carrier.

At least one of configured BWPs may be active, and the terminal 20 need not assume that predetermined signals/channels are transmitted and received outside an active BWP. Furthermore, a "cell," a "carrier," or the like in the present disclosure may be replaced with a "BWP."

Structures of the radio frame, the subframe, the slot, the mini slot, and the symbol are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the cyclic prefix (CP) length, and the like can be variously changed.

In the present disclosure, for example, when an article such as "a," "an," or "the" in English is added by a translation, the present disclosure may include a case in which a noun following the article is the plural.

In the present disclosure, "A and B are different" may mean "A and B are different from each other." However, this may also mean "A and B are different from C." Terms such as "separated" or "combined" may be interpreted the same as "different."

Each embodiment or example described in the present disclosure may be used alone, in combination, or may be switched in accordance with the implementation. Furthermore, notification of predetermined information (for example, notification of "being X") is not limited to notification performed explicitly, but may be performed implicitly (for example, not notifying the predetermined information).

Although the present disclosure has been described above in detail, it is obvious to those skilled in the art that the present disclosure is not limited to the embodiments described in the present disclosure. The present disclosure may be implemented as revised and modified embodiments without departing from the gist and scope of the present disclosure as set forth in the accompanying claims. Accordingly, the description of the present disclosure is for the purpose of illustration and does not have any restrictive meaning to the present disclosure.

### [DESCRIPTION OF THE REFERENCE NUMERALS]

- 10: base station
- 110: transmitting unit
- 120: receiving unit
- 130: configuration unit
- 140: control unit
- 20: terminal
- 210: transmitting unit
- 220: receiving unit
- 230: configuration unit
- 240: control unit
- 30: wireless relay device
- 310: transmitting unit
- 320: receiving unit
- 330: control unit
- 340: change unit
- 350: antenna unit
- 1001: processor
- 1002: storage device
- 1003: auxiliary storage device
- 1004: communication device
- 1005: input device
- 1006: output device
- 2001: vehicle
- 2002: drive unit
- 2003: steering unit
- 2004: accelerator pedal
- 2005: brake pedal
- 2006: shift lever
- 2007: front wheel
- 2008: rear wheel
- 2009: axle
- 2010: electronic control unit
- 2012: information service unit
- 2013: communication module
- 2021: current sensor
- 2022: rotation speed sensor
- 2023: air pressure sensor
- 2024: vehicle speed sensor
- 2025: acceleration sensor
- 2026: brake pedal sensor
- 2027: shift lever sensor
- 2028: object detection sensor
- 2029: accelerator pedal sensor
- 2030: driver assistance system unit
- 2031: microprocessor
- 2032: memory (ROM, RAM)
- 2033: communication port (IO port)

## Claims

1. A wireless relay device comprising:
a transmitting unit configured to transmit, to a base station, a first signal for allowing the base station to identify the wireless relay device;
a receiving unit configured to receive, from the base station, a second signal about a permission to operate as a wireless relay device; and
a control unit configured to enable, when the receiving unit receives the second signal, a relay function that allows a signal received from the base station to be transmitted to a terminal and a signal received from the terminal to be transmitted to the base station.

2. The wireless relay device according to claim 1, wherein the transmitting unit is further configured to transmit, to the base station, a third signal that represents a request for enabling the relay function.

3. The wireless relay device according to claim 1, wherein the transmitting unit is further configured to includes, in the first signal, information about a channel state in communication between the wireless relay device and the base station or the terminal.

4. The wireless relay device according to claim 1, wherein the receiving unit is further configured to obtain, from the second signal, a parameter related to a beam configuration that is applicable to the relay function.

5. The wireless relay device according to claim 2, wherein the transmitting unit is further configured to transmit, to the base station, the first signal with the third signal included therein.

6. A communication method executed by a wireless relay device, the method comprising:
transmitting, to a base station, a first signal for allowing the base station to identify the wireless relay device;
receiving, from the base station, a second signal about a permission to operate as a wireless relay device; and
enabling, when the second signal is received, a relay function that allows a signal received from the base station to be transmitted to a terminal and a signal received from the terminal to be transmitted to the base station.
